# EUROPÄISCHE PATENTSCHRIFT

(11) **EP 0 631 752 B1**
(45) Veröffentlichungstag und Bekanntmachung des Hinweises auf die Patenterteilung: **13.11.1996**
(21) Anmeldenummer: 93110464.0
(22) Anmeldetag: 30.06.1993
(51) Int. Cl.: A47J 31/54, A47J 31/36

(54) **Espressomaschine**
Espressomachine
Machine à café express

(43) Veröffentlichungstag der Anmeldung: 04.01.1995
(73) Patentinhaber: Eugster/Frismag AG, CH-8590 Romanshorn (CH)
(72) Erfinder: Eugster, Arthur, CH-8590 Romanshorn (CH); Fischer, Daniel, CH-8590 Romanshorn (CH)
(74) Vertreter: Grünecker, Kinkeldey, Stockmair & Schwanhäusser Anwaltssozietät

(56) Entgegenhaltungen:
- DE-A- 2 638 380
- DE-C- 3 419 365
- DE-U- 8 619 510
- FR-A- 1 569 903
- FR-A- 2 130 585
- FR-A- 2 288 503

## Beschreibung

Die vorliegende Erfindung bezieht sich auf eine Espresso-Maschine nach dem Oberbegriff des Anspruches 1.

Es sind Espresso-Maschinen bekannt, die einen mit einer Heizung versehenen, druckdicht verschließbaren Wassertank aufweisen. In dieser Maschine wird der zum Herstellen von Espresso erforderliche Wasserdruck durch den im Wassertank entstehenden Dampfdruck erzeugt. Üblicherweise weisen derartige Maschinen auch einen Dampfauslaß auf, um beispielsweise Milch zur Herstellung von Cappuccino aufzuschäumen. Dazu wird dem unter Druck stehenden Wassertank im oberen, nicht mit Wasser gefüllten Bereich Dampf über ein einstellbares Ventil entnommen. Diese Maschinen sind zwar billig herzustellen, weil sie keine Pumpe benötigen, jedoch unbequem zu handhaben, da die erforderliche Wassermenge für jeden Brühvorgang erneut einzufüllen und in der Menge genau zu dosieren ist. Nachdem der Wassertank druckdicht verschlossen werden muß, ist der Verschluß meist grob und schwergängig. Außerdem ist es äußerst ärgerlich, wenn Dampf zum Aufschäumen von Milch für einen Cappuccino benötigt wird und das gesamte Wasser bereits für den Espresso-Aufguß verbraucht ist. Es bleibt dann nichts anderes übrig, als die Maschine ganz abzudampfen, damit der Verschluß geöffnet werden kann und die für die Dampfbildung benötigte Wassermenge nachzufüllen und erneut aufzuheizen.

Aus diesen Gründen wird meist den Espresso-Maschinen, die mit Durchlauferhitzer und Pumpe arbeiten, der Vorzug gegeben, auch wenn diese Maschinen im Preis höher liegen. Um Brühwasser mit einer Mindesttemperatur von 95° C zu erhalten und um zu verhindern, daß der Druck über einen unzulässig hohen Wert ansteigt, wird entweder die Heizleistung oder die Pumpenleistung geregelt, bzw. es wird die Heizleistung an die Pumpenförderleistung genau angepaßt. Für die Dampferzeugung bedient man sich üblicherweise derselben Pumpe, die allerdings in einer zweiten Betriebsart mit geringerer Förderleistung arbeitet, so daß das Wasser bei gleicher Heizleistung über den Siedepunkt erhitzt wird. In dieser Betriebsart wird Wasser in kleinen Portionen in den auf über 100°C aufgeheizten Durchlauferhitzer gepumpt und in diesen kleinen Portionen zum Verdampfen gebracht. Der Dampfausstoß erfolgt dabei schubweise und unter einer unangenehmen Geräuschbildung im Durchlauferhitzer. Aus der FR-A- 15 69 903 ist eine Kaffeemaschine gemäß dem Oberbegriff des Anspruchs 1 bekannt, bei der die Förderleistung der Pumpe über zwei auf unterschiedliche Temperaturen ansprechende Thermostate gesteuert wird. Bei einer Kaffeemaschine nach der FR-A- 21 30 585 wird die Förderleistung der Pumpe für die beiden Betriebsarten konstant gehalten und der geringere Wasserbedarf für den Dampfbetrieb dadurch erreicht, daß das zu viel geförderte Wasser über eine Zusatzleitung am Durchlauferhitzer vorbeigeführt wird.

Der vorliegenden Erfindung liegt die Aufgabe zugrunde, eine mit einem Durchlauferhitzer arbeitende Espressomaschine anzugeben, mit der ohne Pumpenbetrieb Dampf erzeugbar ist.

Diese Aufgabe wird mit den Merkmalen des Anspruches 1 gelöst.

Durch die spezielle Ausbildung des Durchlauferhitzers mit einem ausreichend großen Wasservolumen ist es auf einfache Weise möglich, ohne Pumpenbetrieb Dampf zu erzeugen. Damit das gegenüber normalen mit lediglich einem dünnen Wasserrohr arbeitenden Durchlauferhitzern vergrößerte Wasservolumen gut erhitzt werden kann, sind Wärmetauscherrippen vorgesehen, die in das Volumen hineinragen. Durch den unten liegenden Kaltwasserzulauf und den obenliegenden Brühwasserauslaß ist gewährleistet, daß sich Kalt- und Heißwasser nicht vermischen und die Durchlauferhitzerfunktion im Pumpenbetrieb erhalten bleibt.

Bevorzugte Weiterbildungen sind in den Unteransprüchen anzugeben.

Anhand eines in der Zeichnung dargestellten bevorzugten Ausführungsbeispiels wird die Erfindung im folgenden näher erläutert. Es zeigen:
- Figur 1: eine Prinzipdarstellung der Espresso-Maschine mit elektrischem Schaltschema;
- Figur 2: den Betriebsartenschalter in den einzelnen Schaltstellungen;
- Figur 3: den Durchlauferhitzer im Längsschnitt;
- Figur 4: den Durchlauferhitzer im Querschnitt, und
- Figur 5: eine perspektivische Ansicht des Frischwasser-Einlaßstutzens.

Die erfindungsgemäße Espressomaschine enthält einen Frischwasserbehälter 1, eine elektrische Pumpe 2 und einen Durchlauferhitzer 3 mit elektrischer Heizung 4. Der Frischwasserbehälter 1 ist mit der Pumpe 2 über eine Verbindungsleitung 5 und die Pumpe 2 mit dem Durchlauferhitzer 3 über eine Verbindungsleitung 6 verbunden. Der Brühwasserauslauf 7 des Durchlauferhitzers 3 steht über eine Verbindungsleitung 8 mit einem Mehrwegeventil 9 in Verbindung, das einen Dampfauslaß 10 und einen Brühwasserauslaß 11 aufweist. Der Brühwasserauslaß 11 mündet in einem Filterträger 12, mit dem sich ein nicht dargestellter Behälter mit Kaffeemehl verbinden läßt.

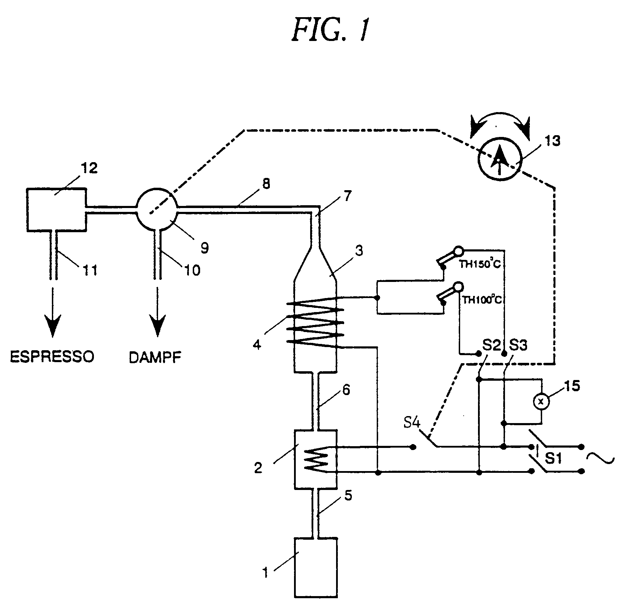

Die Espresso-Maschine weist einen Betriebsartenschalter 13 auf, der mit dem Mehrwegeventil 9 mechanisch gekoppelt ist und über entsprechende Nocken die einzelnen elektrischen Schalter betätigt. In dem in Figur 1 dargestellten elektrischen Schaltbild ist in der Netzzuleitung ein Hauptschalter S1 vorgesehen, der beim Anschluß der Maschine an das Netz bei noch geöffneten Schaltern S2, S3 und S4 lediglich eine Anzeigelampe 15 zum Leuchten bringt. Mit den Schaltern S2 und S3 läßt sich die elektrische Heizung 4 einschalten, während mit dem Schalter S4 die Pumpe 2 eingeschaltet wird. In der Spannungsversorgung für die Heizung 4 des Durchlauferhitzers 3 sind zwei Thermostatschalter TH 100°C und TH 150°C vorgesehen.

Der Thermostatschalter TH 100°C liegt in Reihe zum Schalter S2 und der Thermostatschalter TH 150°C in Reihe zum Schalter S3. Die beiden Thermostatschalter TH 100°C und TH 150° sind am Durchlauferhitzer angeordnet und öffnen, wenn sie eine Temperatur von 100°C bzw. 150°C erreichen. Die Schalttemperatur des Thermostatschalters TH 150°C kann auch niedriger liegen, sollte aber wenigstens 120° betragen. Unter der jeweiligen Temperatur sind sie geschlossen.

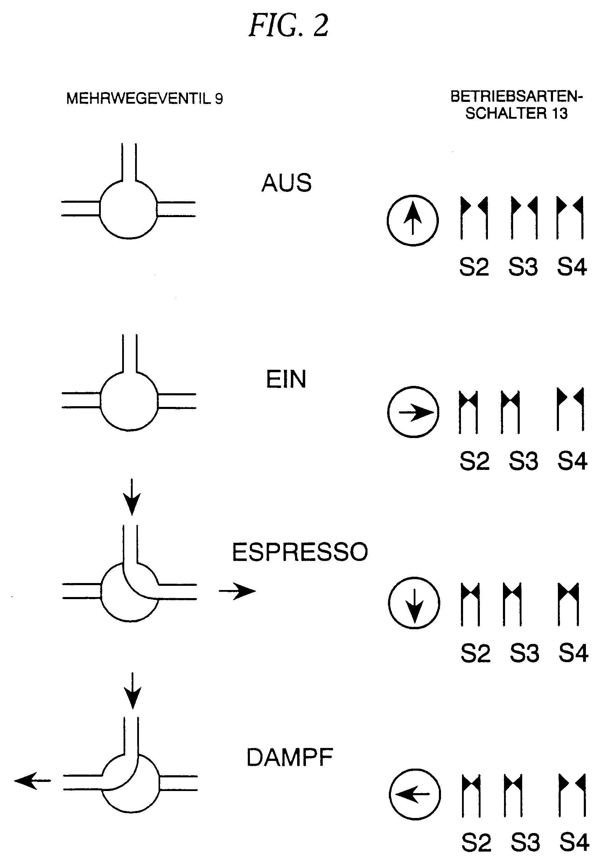

In Figur 2 ist die Funktion des Betrieosartenschalters 13 zusammen mit dem Mehrwegeventil 9 erläutert. Der Betriebsartenschalter 13 ist ein Drehschalter mit unterschiedlichen Stellungen, nämlich "AUS","EIN", "ESPRESSO" und "DAMPF". Er enthält die Schalter S2, S3 und S4, die über Nocken betätigbar sind. Außerdem ist der Betriebsartenschalter 13 mechanisch mit dem Mehrwegeventil 9 gekoppelt. Die Zuordnungen der Stellungen der Schalter S2-S4 zu den Stellungen des Mehrwegeventils 9 ist aus Figur 2 zu ersehen. In der Stellung "AUS" sind die drei Schalter S2-S4 geöffnet. Die Heizung 4 und die Pumpe 2 sind abgeschaltet. Es leuchtet nur die Auszugslampe 15, die anzeigt, daß der Temperaturschalter S1 eingeschaltet ist. In der Stellung "EIN" ist der Schalter S2 geschlossen, wodurch die Heizung 4 über den Thermostatschalter TH 100°C zur Spannung liegt. Das im Durchlauferhitzer 3 befindliche Wasser erhitzt sich auf ca. 95° C und wird auf dieser Temperatur gehalten, indem der Thermostatschalter TH 100°C als Zweipunktregler bei Bedarf aus- und einschaltet. In der Stellung "Espresso" wird die Pumpe 2 über den Schalter S4 zugeschaltet. Im Mehrwegeventil 9 wird der Wassereinlauf mit dem Brühwasserauslaß 11 verbunden. Beim Übergang in die Stellung "DAMPF" wird der Schalter S3 geschlossen, der Schalter S2 geöffnet und die Pumpe 2 durch Öffnen des Schalters S2 abgeschaltet. Gleichzeitig wird im Mehrwegeventil 9 der Wassereinlauf mit dem Dampfauslaß 10 verbunden. Da nun der Thermostatschalter TH 150°C wirksam ist, aber erst bei einer Temperatur von 150°C abschaltet, kommt das Wasser im Durchlauferhitzer 3 zum Kochen und tritt als Dampf aus. Da der Durchlauferhitzer 3 eine ausreichende Menge Wasser enthält, steht ausreichend Dampf zur Verfügung, um beispielsweise ein Glas Milch von Kühlschranktemperatur auf 80 - 90°C aufzuheizen. Wenn alles Wasser im Durchlauferhitzer 3 verdampft ist, steigt die Temperatur am Thermostatschalter TH 150° auf 150°C und die Heizung 4 wird alternierend aus- und angeschaltet. Beim Zurückschalten auf "ESPRESSO" wird der Durchlauferhitzer 3 über die Pumpe 2 wieder mit Frischwasser gefüllt und kühlt sich auf 95°C ab. Um zu verhindern, daß das Wasser durch die Pumpe hindurch zum Frischwasserbehälter 1 gedrückt wird, ist entweder die Pumpe mit einem Rückschlagventil ausgebildet oder selbstsperrend. Sollte die Wassermenge im Durchlauferhitzer für die Dampfbildung nicht ausgereicht haben, braucht man lediglich kurzzeitig in den ESPRESSO-Betrieb zurückgehen, um den Durchlauferhitzer wieder zu füllen und kann anschließend erneut Dampf erzeugen.

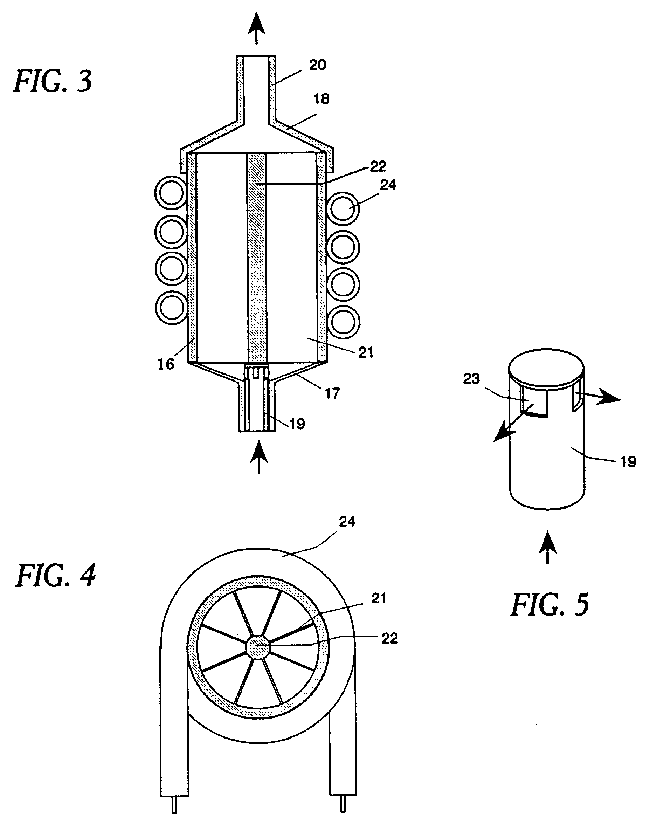

Der Durchlauferhitzer ist in den Figuren 3, 4 und 5 mit seinen Einzelteilen dargestellt. Er besteht im wesentlichen aus einem rohrförmigen Körper 16 mit einem Außendurchmesser von etwa 3,5 cm und einer axialen Länge von 7 cm. Die obere und untere Stirnfläche sind durch ein Bodenteil 17 und ein Deckelteil 18 abgeschlossen. In der gezeichneten Ausführungsform ist das Bodenteil 17 mit dem rohrförmigen Körper 16 einstückig hergestellt. Das Deckelteil 18 ist dichtend aufgesetzt. In das Bodenteil 17 ist ein Frischwasseranschlußstutzen 19 integriert, während das Deckelteil 18 einen Brühwasserauslaufstutzen 20 aufweist. In dem rohrförmigen Körper 16 sind am Umfang gleichmäßig verteilt acht sich axial erstreckende Wärmetauscherrippen bzw. -bleche 21 angeordnet, die sich radial nach innen erstrecken und dort in einem zentralen Haltesteg 22 zusammenlaufen. Die Wärmetauscherrippen 21 erstrecken sich nahezu über die gesamte Lange des rohrförmigen Abschnitts 16. Der Frischwasseranschlußstutzen 19 ragt etwas in das Innere des Wärmetauschers hinein und ist an seinem Ende, wie in Figur 5 dargestellt, geschlossen und weist am Umfang verteilte seitliche Auslaßöffnungen 23 auf. Dadurch wird gewährleistet, daß das zulaufende Frischwasser aus dem untenliegenden Frischwasseranschlußstutzen 19 horizontal austritt und sich nicht mit bereits erwärmtem Wasser vermischt. Am äußeren Umfang des rohrförmigen Körpers 16 ist die Heizung 4 in Form einer schraubenlinienförmigen Heizschlange angeordnet. Diese Heizschlange 24 kann entweder als keramischer Körper mit eingelassenem Widerstanddraht (wie dargestellt) eng anliegend auf den rohrförmigen Körper 16 aufgesetzt sein, oder in die Wandung integriert sein. Mit den oben angegebenen Abmessungen des Durchlauferhitzers ergibt sich ein Wasservolumen im Durchlauferhitzer von ca. 50 ccm, was ausreichend ist, um eine größere Tasse mit Milch von Kühlschranktemperatur auf etwa 80° C zu erhitzen und die Milch dabei aufzuschäumen.

Die wasserführende Oberfläche des Durchlauferhitzers 3 ist oberflächenveredelt, beispielsweise eloxiert. Sie kann auch gespattert sein. Das ist ein Verfahren, mit dem sich Glas im Plasmastrahl auf die Oberfläche auftragen läßt. Eine andere Möglichkeit besteht darin, durch Flammspritzen einen keramischen Überzug aufzubringen.

## Patentansprüche

1. Espressomaschine mit einem Durchlauferhitzer (3), der eine wasserführende Kammer (16) und eine der Kammer zugeordnete elektrische Heizung (4) aufweist, einem Frischwasserbehälter (1) und einer zwischen dem Frischwasserbehälter (1) und dem Durchlauferhitzer (3) angeordneten Pumpe (2) und einem dem Durchlauferhitzer nachgeschalteten, wahlweise zu öffnenden Brühwasserauslauf (7) und einem Dampfauslaß (10), **dadurch gekennzeichnet,** daß der Durchlauferhitzer (3) eine Kammer mit einem Fassungsvermögen von etwa 30 bis 60 ccm aufweist, der das Frischwasser von unten über einen Frischwassereinlaß (19) zuführbar ist und die einen obenliegenden Brühwasserauslaß (20) aufweist, daß die Kammer mit nach innen ragenden Wärmetauscherrippen (21) versehen ist, daß die Pumpe (2) zur Bildung von Dampf ausgeschaltet ist, und daß die Pumpe (2) mit einem Rückschlagventil ausgebildet oder selbstsperrend ist.

2. Espressomaschine nach Anspruch 1, **dadurch gekennzeichnet**, daß der Durchlauferhitzer (3) mit kreisförmigem Querschnitt ausgebildet ist und die Warmetauscherrippen (21) am Umfang verteilt in axialer Richtung verlaufen.

3. Espressomaschine nach Anspruch 1 oder 2, **dadurch gekennzeichnet**, daß der Frischwassereinlaß einen in den Innenraum des Durchlauferhitzers (3) ragenden Einlaßstutzen (19) aufweist, der stirnseitig geschlossen ist und seitliche Auslaßöffnungen (23) aufweist.

4. Espressomaschine nach einem der Ansprüche 1 bis 3, **dadurch gekennzeichnet**, daß ein Betriebsartenschalter (13) vorgesehen ist, mit dem zwischen Heißwasseraufbereitung und Dampfbildung umschaltbar ist, und daß der Betriebsartenschalter (13) im Betrieb der Heißwasseraufbereitung gleichzeitig die Pumpe (2) einschaltet und im Betrieb der Dampfbildung ausschaltet.

5. Espressomaschine nach Anspruch 4, **dadurch gekennzeichnet**, daß dem Durchlauferhitzer (3) ein Mehrwegeventil (9) nachgeschaltet ist, das mit dem Betriebsartenschalter (13) zwangsgekoppelt ist.

6. Espressomaschine nach wenigstens einem der Ansprüche 1 bis 5, **dadurch gekennzeichent**, daß der Durchlauferhitzer (3) einen rohrförmigen Abschnitt (16) aufweist, der als Aluminium-Strangproßprofil ausgebildet ist, das an seinen Stirnflächen mit Stirnkappen (17, 18) verschlossen ist.

7. Espressomaschine nach wenigstens einem der Ansprüche 2 bis 5, **dadurch gekennzeichnet**, daß der Durchlauferhitzer (3) ein Aluminiumdruckgußteil, bestehend aus einem rohrförmigen Abschnitt (16) und einem integrierten Bodenteil (17), aufweist, daß dieses Druckgußteil mit einer damit verstemmten Stirnkappe (18) verschlossen ist, und daß die Heizung (4) in Form einer elektrisch isolierten Heizschlange (24) in die Wandung eingegossen ist.

8. Espressomaschine nach wenigstens einem der Ansprüche 1 bis 7, **dadurch gekennzeichnet**, daß die Innenoberfläche des Durchlauferhitzers oberflächenveredelt ist.

9. Espressomaschine nach Anspruch 8, **dadurch gekennzeichnet**, daß die Oberflächenveredelung aus einem Eloxal besteht.

## Claims

1. Espresso machine having an instantaneous water heater (3) which exhibits a water-channelling chamber (16) and an electric heating means (4) assigned to the chamber, having a fresh-water container (1) and a pump (2) arranged between the fresh-water container (1) and the instantaneous water heater (3), and having a brewed-water outflow (7), which is arranged downstream of the instantaneous water heater and can be opened as required, and a steam outlet (10), characterized in that the instantaneous water heater (3) exhibits a chamber with a capacity of approximately 30 to 60 ccm, it being possible for the fresh water to be fed to said chamber from below via a fresh-water inlet (19), and the chamber exhibiting a brewed-water outlet (20) located at the top, in that the chamber is provided with inwardly projecting heat-exchanger ribs (21), in that the pump (2) is switched off for the formation of steam, and in that the pump (2) is designed with a non-return valve or is self-closing.

2. Espresso machine according to Claim 1, characterized in that the instantaneous water heater (3) is designed with a circular cross-section, and the heat-exchanger ribs (21) are distributed on the circumference, extending in the axial direction.

3. Espresso machine according to Claim 1 or 2, characterized in that the fresh-water inlet exhibits an inlet stub (19) which projects into the interior of the instantaneous water heater (3), is closed at the end and exhibits lateral outlet openings (23).

4. Espresso machine according to one of Claims 1 to 3, characterized in that an operating-mode switch (13) is provided, and this can be used to switch over between hot-water preparation and steam formation, and in that the operating-mode switch (13), in hot-water-preparation mode, simultaneously switches on the pump (2) and, in steam-formation mode, switches off said pump.

5. Espresso machine according to Claim 4, characterized in that the instantaneous water heater (3) has arranged downstream of it a multi-way valve (9) which is positively coupled to the operating-mode switch (13).

6. Espresso machine according to at least one of Claims 1 to 5, characterized in that the instantaneous water heater (3) exhibits a tubular section (16) which is designed as an aluminium extruded profile which is closed at its end surfaces by means of end caps (17, 18).

7. Espresso machine according to at least one of Claims 2 to 5, characterized in that the instantaneous water heater (3) exhibits an aluminium diecasting, comprising a tubular section (16) and an integrated base part (17), in that said diecasting is closed by means of an end cap (18) caulked thereto, and in that the heating means (4) is cast into the wall in the form of an electrically insulated heating coil (24).

8. Espresso machine according to at least one of Claims 1 to 7, characterized in that the inner surface of the instantaneous water heater is surface-finished.

9. Espresso machine according to Claim 8, characterized in that the surface finish consists of an anodic coating.

## Revendications

1. Machine à café express comprenant un chauffe-eau rapide (3), qui comporte une chambre (16) contenant de l'eau et un dispositif de chauffage électrique (4) associé à la chambre, un réservoir d'eau fraîche (1) et une pompe (2) disposée entre le réservoir d'eau (1) et le chauffe-eau rapide (3), et une sortie d'eau bouillante (7) et une sortie de vapeur (10) montées en aval du chauffe-eau rapide (3) et pouvant être ouvertes au choix, caractérisée en ce que le chauffe-eau rapide (3) comporte une chambre d'une capacité d'environ 30 à 60 cm³ dans laquelle l'eau fraîche peut être amenée par le bas, par l'intermédiaire d'une arrivée d'eau fraîche (19) et qui comporte une sortie d'eau bouillante (20) située en haut, en ce que la chambre est pourvue d'ailettes d'échange de chaleur (21) faisant saillie vers l'intérieur, en ce que la pompe (2) est arrêtée pour la formation de vapeur et que la pompe (2) est équipée d'un clapet antiretour ou est à blocage automatique.

2. Machine à café express selon la revendication 1, caractérisée en ce que le chauffe-eau rapide (3) a une section transversale circulaire et les ailettes d'échange de chaleur (21) s'étendent dans la direction axiale en étant réparties sur le pourtour.

3. Machine à café express selon la revendication 1 ou 2, caractérisée en ce que l'arrivée d'eau fraîche comporte une tubulure d'arrivée (19) qui fait saillie à l'intérieur du chauffe-eau rapide (3), qui est fermée sur le côté frontal et comporte des orifices de sortie (23) latéraux.

4. Machine à café selon l'une des revendications 1 à 3, caractérisée en ce qu'il est prévu un sélecteur de fonctions (13) qui permet de commuter entre une préparation d'eau chaude et une formation de vapeur et que le sélecteur de fonctions (13) met simultanément la pompe (2) en marche lors de la préparation d'eau chaude et l'arrête lors de la formation de vapeur.

5. Machine à café express selon la revendication 4, caractérisée en ce qu'en aval du chauffe-eau rapide (3) est monté un clapet à plusieurs voies (9) qui est couplé de manière coercitive avec le sélecteur de fonctions (13).

6. Machine à café selon au moins l'une des revendications 1 à 5, caractérisée en ce que le chauffe-eau rapide (3) comporte une partie tubulaire (16) qui est réalisée sous forme de profité en aluminium extrudé qui est fermé au niveau de ses faces frontales par des capuchons frontaux (17, 18).

7. Machine à café selon au moins l'une des revendications 2 à 5, caractérisée en ce que le chauffe-eau rapide (3) comporte une pièce en aluminium moulée sous pression, constituée d'une partie tubulaire (16) et d'une partie de fond (17) intégrée, en ce que cette pièce moulée sous pression est fermée par un capuchon frontal (18) resserré et en ce que le dispositif de chauffage (4) est coulé dans la paroi sous la forme d'un serpentin de chauffage (24) isolé électriquement.

8. Machine à café express selon au moins l'une des revendications 1 à 7, caractérisée en ce que la surface intérieure du chauffe-eau rapide est traitée.

9. Machine à café express selon la revendication 8, caractérisée en ce que le traitement de la surface est une anodisation.
